# FASCICULE DE BREVET EUROPEEN

(11) **EP 4 307 538 B1**
(45) Date de publication et mention de la délivrance du brevet: **25.11.2026**
(21) Numéro de dépôt: 23182242.0
(22) Date de dépôt: 29.06.2023
(51) Int. Cl.: H02K 5/20, H02K 9/22, H02K 3/24

(54) **MACHINE ÉLECTRIQUE AVEC CANAL DE REFROIDISSEMENT ENTRE UN FLASQUE ET LE MATÉRIAU D'ENROBAGE DES TÊTES DE BOBINES**
ELEKTRISCHE MASCHINE MIT KÜHLKANAL ZWISCHEN EINEM FLANSCH UND DEM HÜLLMATERIAL FÜR DIE WICKLUNGSKÖPFE
ELECTRIC MACHINE WITH A COOLING CHANNEL BETWEEN A FLANGE AND THE COIL END COATING MATERIAL

(30) Priorité: 12.07.2022 FR 2207147
(43) Date de publication de la demande: 17.01.2024
(73) Titulaire: IFP Energies nouvelles, 92500 Rueil-Malmaison (FR)
(72) Inventeur: VALIN, Thomas, 92852 RUEIL-MALMAISON CEDEX (FR); TALVARD, Benoit, 92852 RUEIL-MALMAISON CEDEX (FR); VENTURI, Stephane, 92852 RUEIL-MALMAISON CEDEX (FR); MILOSAVLJEVIC, Misa, 92852 RUEIL-MALMAISON CEDEX (FR)
(74) Mandataire: IFP Energies nouvelles

(56) Documents cités:
- CN-U- 209 119 985
- US-A1- 2002 153 784
- US-A1- 2018 337 572
- US-A1- 2019 207 457

## Description

### Domaine technique

La présente invention concerne le domaine des machines électriques tournantes, et en particulier le refroidissement de ces machines électriques qui peuvent fonctionner en tant que moteur électrique ou en tant que générateur électrique. Les machines électriques de l'invention peuvent notamment être utilisées comme moteur électrique dans des applications de transport (automobile par exemple), des engins et outils agricoles.

L'invention peut notamment être utilisée pour une machine électrique tournante synchrone, notamment une machine électrique synchro-réluctante, assistée ou non d'aimants permanents, mais peut également être appliquée à d'autres types de machines électriques, comme des machines synchrones ou asynchrones.

Une machine électrique comporte classiquement une partie fixe, le stator, et une partie mobile en rotation, le rotor, disposées coaxialement l'une dans l'autre. Le rotor est généralement logé à l'intérieur du stator qui porte des bobinages électriques générant un champ magnétique permettant d'entraîner en rotation le rotor (fonctionnement en tant que moteur électrique). Le stator comprend généralement un corps de stator et des bobines qui entourent au moins partiellement le corps de stator.

Lors de leur fonctionnement, les machines électriques s'échauffent du fait des pertes électromagnétiques (pertes par effet Joule, pertes fer et éventuelles pertes aimants) et mécaniques. Cet échauffement nuit à leur fonctionnement et conduit à la dégradation de leurs performances (puissance et rendement). Par exemple, si le stator n'est pas refroidi (ou pas suffisamment refroidi), la température du bobinage augmente, ce qui peut entraîner une baisse de la conductivité électrique du conducteur en aluminium ou en cuivre constituant les bobines et une diminution de la durée de vie du bobinage. La résistance électrique du conducteur électrique augmentant, il y a également une augmentation des pertes et une diminution du rendement. Les divers composants électromagnétiques d'une machine électrique, ainsi que certains matériaux isolants utilisés dans les pièces de la machine électrique, sont ainsi sensibles à l'échauffement produit en fonctionnement, et leur refroidissement est indispensable pour dissiper la chaleur produite, afin de conserver un bon rendement de la machine, d'assurer une répétabilité de ses performances, d'allonger sa durée de vie et de limiter la maintenance.

La recherche d'un refroidissement performant est donc une préoccupation majeure pour les fabricants et les intégrateurs de machines électriques.

### Technique antérieure

Classiquement, le refroidissement de la machine électrique est réalisé par un circuit de circulation d'un fluide de refroidissement. Une des solutions consiste à faire circuler un fluide de refroidissement dans un canal situé dans la chemise extérieure (appelée également carter de la machine électrique) en contact avec la surface extérieure du stator. Dans ce système de refroidissement, l'échange thermique est réalisé radialement, et est indirect entre les parties actives (rotor et stator) de la machine électrique et le fluide de refroidissement. En effet, le flux thermique dans les bobines transite par conduction du cuivre des bobines au stator, puis par la chemise, avant d'être transmis dans le fluide de refroidissement par convection. Cette solution refroidit bien le stator. Toutefois, la source de refroidissement est éloignée des têtes de bobines qui forment un point chaud, et qui sont situées aux extrémités du stator, et généralement libres dans l'air interne de la machine électrique. Ainsi, le refroidissement n'est pas optimisé par ce système de refroidissement. De plus, un tel système accroit le diamètre de la machine électrique. Par exemple, pour une machine électrique compacte d'un diamètre stator de 150 mm, la chemise peut représenter de 30 à 40 mm, ce qui correspond à 20 à 25 % du diamètre de la machine électrique. En outre, cette solution nécessite des opérations d'usinage de la chemise, et entraîne une augmentation de la masse de la machine électrique.

Pour améliorer le refroidissement des têtes de bobines, il existe des solutions mettant en œuvre de la résine conductrice thermique pour augmenter la conductivité entre les têtes de bobines et le carter, et donc favoriser l'évacuation des calories vers la chemise. Une telle résine est généralement appelée « potting » de l'anglais enrobage. Cette solution est efficace, toutefois elle présente un coût supplémentaire (matière résine et procédé de mise en œuvre), et maintient la fonction de refroidissement dans la chemise avec l'augmentation du diamètre externe de l'enveloppe extérieure de la machine électrique, et avec augmentation de la masse du moteur.

La demande de brevet dont le numéro de dépôt est FR 21/07709 propose une solution à ce problème avec une forme particulière de canaux de refroidissement. Pour cette technologie, les canaux de refroidissement sont agencés dans le carter, le matériau d'enrobage, et dans les flasques. Bien que donnant satisfaction, cette solution nécessite toujours le passage de canaux dans la chemise, ce qui accroit le diamètre de la machine électrique. De plus, cette solution nécessite une mise en forme spécifique de plusieurs composants : le carter, le matériau d'enrobage et les flasques, ce qui complexifie la fabrication de la machine électrique, et la gestion de l'étanchéité entre ces composants. En outre, les têtes de bobines sont refroidies radialement et non longitudinalement.

La demande de brevet US2018/0323685 A1 décrit la conception d'une machine électrique, pour laquelle les têtes de bobines sont enrobées par un matériau d'enrobage. Le refroidissement des têtes de bobines est prévu par la chemise extérieure ainsi que par un anneau interne. Bien que donnant satisfaction, cette solution nécessite toujours le passage de canaux dans la chemise, ce qui accroit le diamètre de la machine électrique. En outre, les têtes de bobines sont refroidies radialement et non longitudinalement. Les documents CN 209 119 985 U, US 2019/207457 A1, US 2002/153784 A1, US 2018/337572 A1 divulguent des machines électriques comportant des moyens de refroidissement pour les têtes de bobines ; ces machines électriques comportent aussi un carter ayant un circuit de refroidissement.

### Résumé de l'invention

L'invention a pour but de permettre un refroidissement efficace des parties actives d'une machine électrique, en particulier des têtes de bobines, tout en permettant une compacité de la machine électrique. Pour cela, la présente invention concerne une machine électrique comprenant un stator, un rotor, un carter, et deux flasques. Le stator comprend un corps de stator et des bobines, dont les extrémités forment des têtes de bobines à l'extérieur du corps du stator. Selon l'invention, les têtes de bobines sont enrobées dans un matériau d'enrobage. De plus, à chaque extrémité de la machine électrique, un canal de refroidissement est formé entre l'enveloppe extérieure de la machine électrique et une plaque annulaire fixée sur le matériau d'enrobage. Le canal de refroidissement permet un refroidissement efficace des têtes de bobines sans augmentation du diamètre de la machine électrique.

L'invention concerne une machine électrique comprenant un rotor et un stator coaxiaux autour d'un axe longitudinal, un carter et deux flasques, lesdits deux flasques étant agencés respectivement aux extrémités longitudinales dudit carter et forment avec ledit carter une enveloppe extérieure de ladite machine électrique, ledit stator entourant ledit rotor, le stator comprenant un corps de stator et des bobines avec des têtes de bobines, lesdites têtes de bobines étant enrobées d'un matériau d'enrobage, tel qu'une résine. A chaque extrémité longitudinale de ladite machine électrique est agencé un canal de refroidissement pour une circulation d'un fluide de refroidissement, ledit canal de refroidissement étant formé entre ladite enveloppe extérieure de ladite machine électrique et une plaque annulaire fixée à une extrémité longitudinale dudit matériau d'enrobage desdites têtes de bobines.

Selon un mode de réalisation, ladite plaque annulaire est métallique.

Conformément à une mise en œuvre, ladite plaque annulaire comprend au moins une saillie, telle qu'un picot ou une nervure ou un creux, ladite saillie ou ledit creux étant dirigée vers ledit canal de refroidissement et/ou vers ledit matériau d'enrobage.

Avantageusement, ladite plaque annulaire est mobile longitudinalement par rapport à ladite enveloppe extérieure de ladite machine électrique.

De manière avantageuse, des moyens d'étanchéité sont agencés entre ladite plaque annulaire et l'enveloppe extérieure de ladite machine électrique.

Selon un aspect, ledit canal de refroidissement est délimité par ledit flasque et ladite plaque annulaire.

Selon une option, ledit canal de refroidissement est délimité par ledit flasque, ledit carter et ladite plaque annulaire.

Conformément à l'invention, ledit carter ne comporte aucun circuit de refroidissement.

Selon une mise en œuvre, ledit corps de stator comprend un empilement de tôles.

Selon un aspect, ladite machine électrique est une machine électrique synchrone, notamment une machine synchro-réluctante, de préférence une machine synchro-réluctante assistée d'aimants permanents.

D'autres caractéristiques et avantages du système selon l'invention, apparaîtront à la lecture de la description ci-après d'exemples non limitatifs de réalisations, en se référant aux figures annexées et décrites ci-après.

### Liste des figures

[Fig 1]

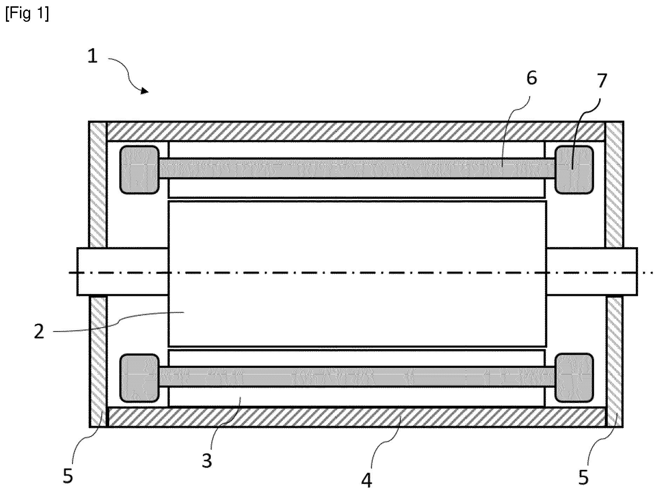

   La figure 1 illustre une construction classique d'une machine électrique.
[Fig 2]

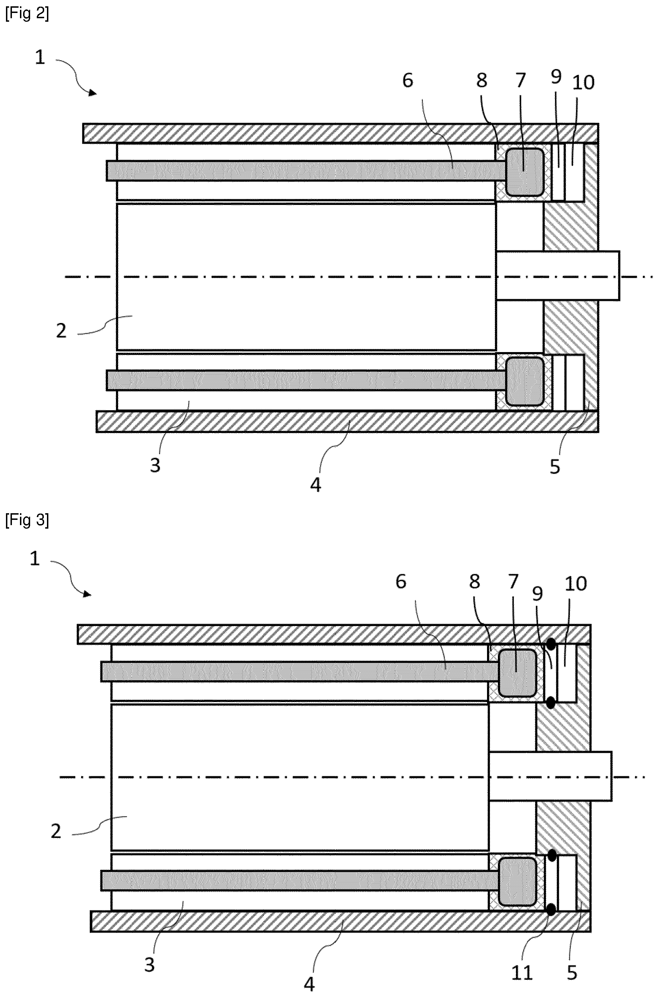

   La figure 2 illustre une machine électrique selon un premier mode de réalisation de l'invention.
[Fig 3]
   La figure 3 illustre une machine électrique selon un deuxième mode de réalisation de l'invention.
[Fig 4]

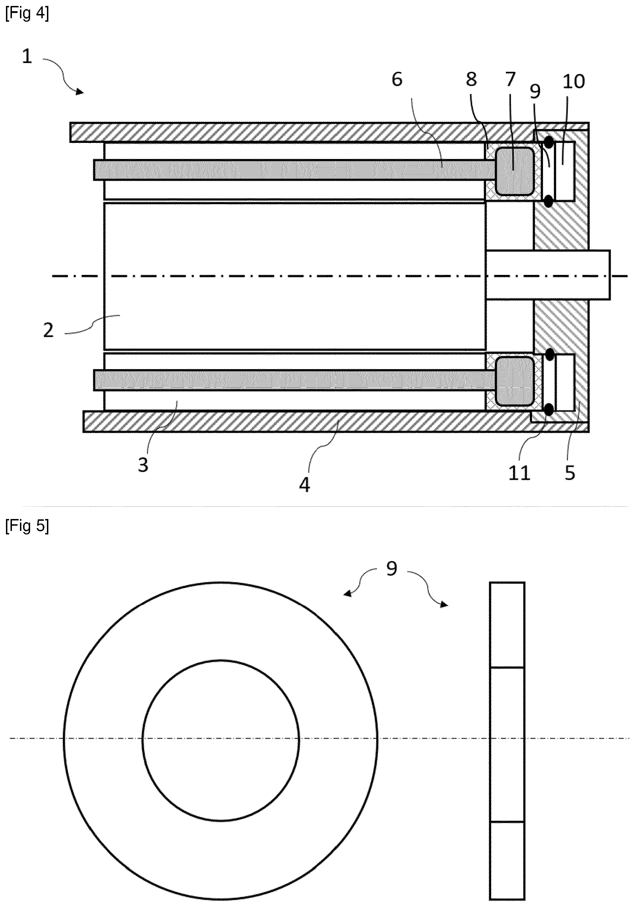

   La figure 4 illustre une machine électrique selon un troisième mode de réalisation de l'invention.
[Fig 5]
   La figure 5 illustre une plaque annulaire selon une première variante de l'invention.
[Fig 6]

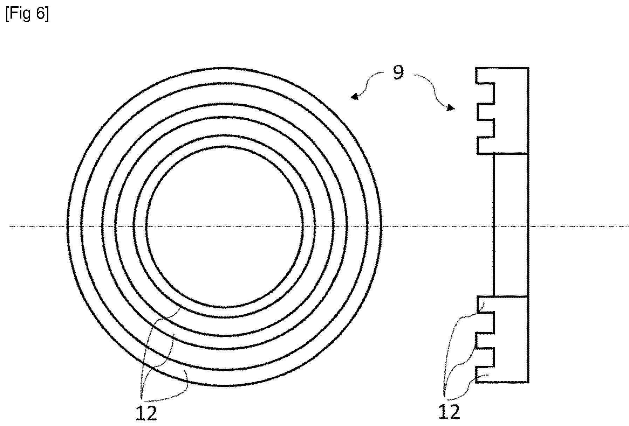

   La figure 6 illustre une plaque annulaire selon une deuxième variante de l'invention.
[Fig 7]

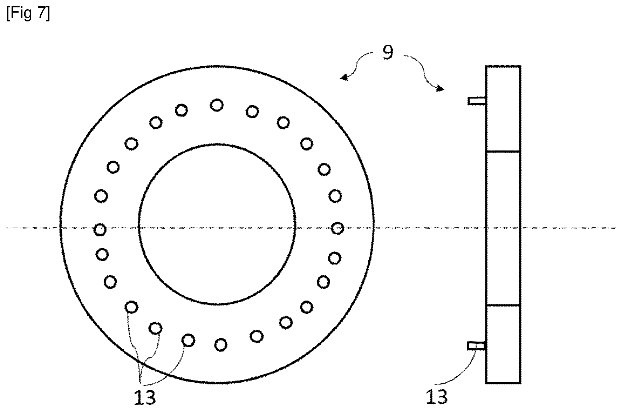

   La figure 7 illustre une plaque annulaire selon une troisième variante de l'invention.

### Description des modes de réalisation

L'invention concerne une machine électrique, notamment une machine électrique tournante. Selon l'invention, la machine électrique comprend :
- Un stator,
- Un rotor, coaxial avec le stator autour d'un axe longitudinal,
- Un carter, entourant radialement le stator,
- Deux flasques, les flasques étant agencés aux extrémités longitudinales du carter, les flasques étant fixés au carter, et formant avec le carter une enveloppe extérieure de la machine électrique, cette enveloppe extérieure servant de protection.

Classiquement, le rotor est mobile en rotation et le stator est fixe par rapport au carter. Le stator entoure le rotor. En d'autres termes, il s'agit d'une machine électrique à rotor interne. Le stator comprend un corps de stator et des bobines insérées dans le corps du stator. Aux deux extrémités longitudinales du corps du stator, les bobines dépassent et sont repliées. Cette partie forme ce qu'on appelle les têtes de bobines. Ainsi, la machine électrique comprend des têtes de bobines à chaque extrémité longitudinale.

Lorsque la machine électrique fonctionne en tant que moteur, le stator génère la rotation du rotor par génération d'un champ magnétique créé par le stator. Lorsque la machine électrique fonctionne en tant que générateur électrique, la rotation du rotor peut générer une énergie électrique dans les bobines du stator au moyen d'un champ magnétique créé par le rotor.

La figure 1 illustre, schématiquement et de manière non limitative, les composants d'une machine électrique. Cette figure est un plan en coupe de la machine électrique selon un plan longitudinal. Sur cette figure, les roulements et les moyens d'étanchéité ne sont pas représentés. La machine électrique 1 comprend un rotor 2 agencé coaxialement au sein d'un stator 3. Le stator est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse les deux flasques 5. En variante, l'arbre du rotor 2 peut traverser un seul flasque 5.

Selon l'invention, les têtes de bobines sont enrobées d'un matériau d'enrobage (appelé en anglais « potting »). Ainsi, une partie de l'espace entre chaque flasque et le corps de stator est rempli du matériau d'enrobage pour enrober les têtes de bobines, à chaque extrémité longitudinale. Toutes les têtes de bobines sont enrobées.

Selon l'invention, l'enrobage des têtes de bobines a sensiblement une forme cylindrique, dont le diamètre extérieur est en contact avec le carter de la machine électrique. De préférence, la forme cylindrique de l'enrobage peut avoir un diamètre interne qui est supérieur ou sensiblement égal au diamètre interne du corps de stator, pour ne pas venir en contact avec la partie tournante formée par le rotor.

De préférence, le matériau d'enrobage peut être un isolant électrique et peut avantageusement être conducteur thermique. Ainsi, il participe à l'évacuation de la chaleur au sein des têtes de bobines. De ce fait, la conduction thermique entre les têtes de bobines et l'enveloppe extérieur est améliorée, ce qui favorise le refroidissement de la machine par rapport à une solution où les têtes de bobines sont entourées seulement d'air qui joue le rôle d'isolant thermique, ce qui nuit au refroidissement de la machine électrique.

De manière avantageuse, le matériau d'enrobage peut être une résine ou tout matériau analogue. Pour ce mode de réalisation, la résine peut être coulée sur place une fois l'assemblage monté. Ainsi, le contact entre le matériau d'enrobage et le corps de stator est optimal. De plus, la résine peut combler tout l'espace autour des têtes de bobines.

De manière avantageuse, le matériau d'enrobage peut être une résine époxy, une résine époxy, alumine/céramique, une résine boostée en alumine qui ont de bonnes propriétés d'isolation électrique (rigidité diélectrique supérieur à 1 kV/mm) tout en assurant des propriétés de conductivité thermique suffisantes (conductivité thermique supérieure à 0,3W/m.K, ou conductivité thermique au moins cinquante fois supérieure à la conductivité thermique de l'air). De plus, la machine électrique comprend un circuit de refroidissement du stator au moyen de la circulation d'un fluide de refroidissement. En effet, un fluide de refroidissement, tel que de l'eau ou de l'eau glycolée, peut circuler dans le circuit de refroidissement, et ainsi refroidir le stator. La température du fluide de refroidissement en entrée peut être inférieure à 80°C, de préférence inférieure à 60°C.

Selon l'invention, le circuit de refroidissement comprend un canal de refroidissement à chaque extrémité longitudinale de la machine électrique, pour la circulation d'un fluide de refroidissement. Chaque canal de refroidissement est agencé entre l'enveloppe extérieure de la machine électrique et une plaque annulaire fixée à une extrémité longitudinale du matériau d'enrobage des têtes de bobines. En d'autres termes, le volume entre chaque flasque et le corps de stator est rempli par le matériau d'enrobage, la plaque annulaire, et le canal de refroidissement. Le canal de refroidissement est donc agencé en face des têtes de bobines. Ainsi, la plaque annulaire permet la transmission de la chaleur entre le matériau d'enrobage et le fluide de refroidissement. Cette construction permet un refroidissement longitudinal des têtes de bobines. Ce refroidissement des têtes de bobines pouvant être suffisant, il n'est pas nécessaire d'associer un canal de refroidissement au sein du carter. Ainsi, selon un mode de réalisation de l'invention, le carter peut ne comporter aucun circuit de refroidissement radial du stator. De cette manière, l'épaisseur du carter peut être réduite par rapport à une machine électrique conventionnelle qui comprendrait un circuit de refroidissement dans le carter. Par conséquent, à diamètre extérieur identique, on peut construire une machine électrique avec des parties actives (rotor et stator) plus importantes. Cela peut permettre d'améliorer les performances de la machine électrique (par exemple le couple) à diamètre extérieur identique. Ainsi, la machine électrique selon l'invention est particulièrement adaptée à une utilisation dans un véhicule, pour lequel le volume disponible est restreint.

Le canal de refroidissement peut avoir une forme sensiblement torique (auquel on ajoute une entrée et une sortie du fluide de refroidissement), dont l'axe est coaxial avec l'axe de la machine électrique. Le diamètre du tore peut sensiblement correspondre au diamètre des têtes de bobines. De préférence, la section du tore peut être sensiblement circulaire.

La plaque annulaire a une épaisseur très réduite par rapport à son diamètre extérieur. La plaque annulaire a une forme d'un anneau.

Avantageusement, la plaque annulaire peut être en matériau métallique, par exemple en aluminium ou ses alliages, ou en cuivre en tout matière analogue. De préférence, la plaque annulaire peut être en aluminium ou ses alliages. En effet, les métaux possèdent une bonne conduction thermique, supérieure à celle du matériau d'enrobage, ce qui permet d'améliorer le refroidissement des têtes de bobines.

Selon un mode de réalisation, afin d'augmenter la surface de contact entre la plaque annulaire et le canal de refroidissement, la plaque annulaire peut comporter au moins une portion en saillie dirigée vers le canal de refroidissement. Cette augmentation de la surface de contact facilite l'échange de chaleur, et favorise le refroidissement du bobinage et notamment des têtes de bobines. La portion en saillie peut être formée par au moins un picot, de préférence une pluralité de picots. Alternativement ou cumulativement, la portion en saillie peut être formée par une nervure, notamment une nervure circulaire, ou par une pluralité de nervures, notamment des nervures circulaires. En outre ou alternativement, afin d'augmenter la surface de contact entre la plaque annulaire et le canal de refroidissement, la plaque annulaire peut comporter au moins une portion en creux depuis le canal de refroidissement. Cette augmentation de la surface de contact facilite l'échange de chaleur, et favorise le refroidissement du bobinage et notamment des têtes de bobines. La portion en creux peut être formée par au moins une rainure.

Selon un mode de réalisation (pouvant être associé au mode de réalisation précédent), afin d'augmenter la surface de contact entre la plaque annulaire et le matériau d'enrobage ; la plaque annulaire peut comporter au moins une portion en saillie dirigée vers le matériau d'enrobage. Cette augmentation de la surface de contact facilite l'échange de chaleur, et favorise le refroidissement des têtes de bobines. De plus, cette augmentation de la surface de contact facilite l'adhésion de la plaque annulaire sur le matériau d'enrobage. La portion en saillie peut être formée par au moins un picot, de préférence une pluralité de picots. Alternativement ou cumulativement, la portion en saillie peut être formée par une nervure, notamment une nervure circulaire, ou par une pluralité de nervures, notamment des nervures circulaires.

Conformément à une mise en œuvre de l'invention, la plaque annulaire peut être mobile longitudinalement par rapport à l'enveloppe extérieure de la machine électrique. En d'autres termes, la plaque annulaire peut coulisser longitudinalement au sein de l'enveloppe extérieure de la machine électrique. Ce coulissement permet la dilatation du matériau d'enrobage en fonction de la chaleur, ce qui permet de diminuer la fatigue du matériau d'enrobage. Pour cette mise en œuvre, des moyens d'étanchéité, tels que des joints, peuvent être prévus entre la plaque annulaire et l'enveloppe extérieure de la machine électrique. Ces moyens d'étanchéité assurent l'étanchéité du canal de refroidissement.

De plus, même pour une mise en œuvre de l'invention, pour laquelle la plaque annulaire est fixe par rapport à l'enveloppe extérieure de la machine électrique, des moyens d'étanchéité, tels que des joints, peuvent être prévus entre la plaque annulaire et l'enveloppe extérieure de la machine électrique. Ces moyens d'étanchéité assurent l'étanchéité du canal de refroidissement.

Selon une option de réalisation, pour laquelle le matériau d'enrobage est de la résine, la plaque annulaire peut être insérée lors de la coulée de la résine, de manière à maximiser la qualité du contact entre la résine et la plaque annulaire, et par conséquent la qualité de la conduction. La plaque annulaire fait ainsi partie intégrante du matériau d'enrobage une fois la résine durcie.

Selon un premier mode de réalisation de l'invention, le canal de refroidissement peut être délimité par un flasque et la plaque annulaire. En d'autres termes, pour ce mode de réalisation, la plaque annulaire peut être montée au sein du flasque qui comporte un évidement annulaire. Ce mode de réalisation simplifie la fabrication du canal de refroidissement. Ce premier mode de réalisation permet de simplifier l'étanchéité : seule une étanchéité entre la plaque annulaire et le flasque est à prévoir.

Selon un deuxième mode de réalisation de l'invention, le canal de refroidissement peut être délimité par un flasque, le carter et la plaque annulaire. En d'autres termes, pour ce mode de réalisation, la plaque annulaire peut être montée au sein d'un évidement annulaire dont la partie extérieure est formée par le carter, et la partie centrale de l'évidement annulaire est formée par le flasque. Ce mode de réalisation simplifie la fixation du flasque sur le carter. Ce deuxième mode de réalisation permet une mise en œuvre plus simple, notamment pour le matériau d'enrobage.

Avantageusement, le corps de stator peut être formé par un empilage de tôles.

Selon un mode de réalisation, le circuit de refroidissement peut comprendre en outre :
- Une entrée du fluide de refroidissement axial ou radial sur chaque flasque,
- Une sortie du fluide de refroidissement axial ou radial sur chaque flasque.

Pour ce mode de réalisation, le circuit de refroidissement peut comprendre un passage par conduit externe rigide ou souple, ou au sein du carter entre la sortie du canal du premier flasque et l'entrée du canal du deuxième flasque

En outre, un deuxième passage entre la sortie du deuxième flasque et le premier flasque peut être prévu, de manière à avoir l'entrée et la sortie du circuit de refroidissement d'un unique côté de la machine électrique.

De préférence, la machine électrique peut être une machine synchrone, notamment une machine synchro-réluctance, de manière préférée une machine synchrone réluctante assistée d'aimants permanents. En effet, de telles machines électriques génèrent de la chaleur importante au sein des têtes de bobines. Toutefois, l'invention peut être appliquée à d'autres types de machine électrique, par exemple les machines asynchrones, les machines réluctantes, etc.

En outre, l'invention, de préférence le mode de réalisation de l'invention sans canal de refroidissement dans le carter, peut être particulièrement adaptée à une machine électrique dite « courte », c'est-à-dire de dimension longitudinale réduite. Une telle machine électrique « courte » est une machine pour laquelle la longueur longitudinale des têtes de bobines est strictement supérieure à la longueur longitudinale du corps de stator. Une telle machine courte peut également être définie lorsque la longueur longitudinale du corps du rotor est inférieure à 0,4 fois le diamètre extérieur du corps du rotor. En effet, pour ce type de machine électrique « courte », le refroidissement par le canal de refroidissement longitudinal est suffisant.

Toutefois, l'invention peut également être appliquée pour une machine électrique « longue ». Pour une telle machine électrique, le canal de refroidissement longitudinal peut être suffisant. Néanmoins, dans certains cas, un canal de refroidissement peut également être prévu dans les flasques pour un refroidissement radial du stator, s'il existe un besoin d'un refroidissement plus important.

La figure 2 illustre, schématiquement et de manière non limitative, une machine électrique selon un premier mode de réalisation de l'invention. Cette figure est un plan en coupe de la machine électrique selon un plan longitudinal. Sur cette figure, les roulements et les moyens d'étanchéité ne sont pas représentés. La partie gauche de la machine électrique n'est pas détaillée pour la simplification de la figure. Toutefois, cette partie peut se déduire par symétrie par rapport à la partie droite. La machine électrique 1 comprend un rotor 2 agencé coaxialement au sein d'un stator 3. Le stator 3 est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse le flasque 5 de droite (il peut traverser ou non le flasque de gauche non représenté). Les têtes de bobines 7 sont enrobées par un matériau d'enrobage 8. Une plaque annulaire 9 est fixée sur l'extrémité longitudinale du matériau d'enrobage 8. Un canal de refroidissement pour la circulation d'un fluide de refroidissement est formé entre la plaque annulaire 9, le carter 4 et le flaque 5. Pour former le canal de refroidissement 10 le flasque comprend un épaulement en contact avec le diamètre interne de la plaque annulaire 9.

La figure 3 illustre, schématiquement et de manière non limitative, une machine électrique selon un deuxième mode de réalisation de l'invention. Le deuxième mode de réalisation correspond au premier mode de réalisation de la figure 2, dans lequel des joints d'étanchéité 11 sont prévus respectivement entre la plaque annulaire 9 et le carter 4, et entre la plaque annulaire 9 et le flasque 5, notamment pour assurer l'étanchéité lorsque la plaque annulaire 9 coulisse longitudinalement dans l'enveloppe extérieure formée par le carter 4 et le flasque 5.

La figure 4 illustre, schématiquement et de manière non limitative, une machine électrique selon un troisième mode de réalisation de l'invention. Sur cette figure, les roulements et les moyens d'étanchéité ne sont pas représentés. Cette figure est un plan en coupe de la machine électrique selon un plan longitudinal. La partie gauche de la machine électrique n'est pas détaillée pour la simplification de la figure. Toutefois, cette partie peut se déduire par symétrie par rapport à la partie droite. La machine électrique 1 comprend un rotor 2 agencé coaxialement au sein d'un stator 3. Le stator 3 est traversé par des bobines 6, qui comportent à chaque extrémité longitudinale des têtes de bobines 7. De plus, la machine électrique comprend une enveloppe extérieure formée par un carter 4 et par deux flasques 5. L'arbre du rotor 2 traverse le flasque 5 de droite (il peut traverser ou non le flasque de gauche non représenté). Les têtes de bobines 7 sont enrobées par un matériau d'enrobage 8. Une plaque annulaire 9 est fixée sur l'extrémité longitudinale du matériau d'enrobage 8. Un canal de refroidissement pour la circulation d'un fluide de refroidissement est formé entre la plaque annulaire 9, et le flaque 5. Pour former le canal de refroidissement 10 le flasque comprend un évidement annulaire, avec un épaulement en contact avec le diamètre interne de la plaque annulaire 9, et la surface interne en contact avec le diamètre externe de la plaque annulaire. Pour le mode de réalisation illustré, des joints d'étanchéité 11 sont prévus entre la plaque annulaire 9 et le flasque 5, respectivement sur les surfaces extérieure et intérieure de la plaque annulaire 9, notamment pour assurer l'étanchéité lorsque la plaque annulaire 9 coulisse longitudinalement. Alternativement, ce mode de réalisation pourrait ne pas comprend de joints d'étanchéité 11.

Les figures 5 à 7 illustrent trois variantes de réalisation d'une plaque annulaire. Sur ces figures, la partie gauche correspond à une vue de face et la partie droite correspond à une vue de côté, qui correspond au plan de coupe des figures 2 à 4.

Pour la première variante de la figure 5, la plaque annulaire 9 est uniquement formée d'un anneau.

Pour la deuxième variante de la figure 6, la plaque annulaire 9 comprend trois nervures circulaires 12 en saillie d'un côté de la plaque annulaire 9. Le nombre de nervures 12 peut être différent : il peut y avoir une seule nervure, ou plusieurs, par exemple deux ou quatre.

Pour la troisième variante de la figure 7, la plaque annulaire 9 comprend une série de picots 13, régulièrement répartis sur un cercle en saillie un côté de la plaque annulaire 9. Le nombre et la répartition des picots 13 peuvent varier.

Les variantes de réalisation des figures 6 et 7 comportent des portions en saillie ou en creux (nervures ou picots) d'un unique côté de la plaque annulaire 9. Toutefois, la plaque annulaire 9 peut comporter des portions en saille de chaque côté de la plaque annulaire 9. La nature des portions en saillie (nervures ou picots) peut être différent d'un côté à l'autre.

Selon une option de réalisation, au moins un côté de la plaque annulaire 9 peut comporter des portions en saillie de nature différentes (nervures et picots).

Comme il va de soi, l'invention ne se limite pas aux seules formes de réalisation de la machine électrique, décrites ci-dessus à titre d'exemple, elle embrasse au contraire toutes les variantes de réalisation dans la mesure où elles ne s'écartent pas de la portée de l'invention qui est définie par les revendications annexées.

## Revendications

1. Machine électrique comprenant un rotor (2) et un stator (3) coaxiaux autour d'un axe longitudinal, un carter (4) et deux flasques (5), lesdits deux flasques (5) étant agencés respectivement aux extrémités longitudinales dudit carter (4) et forment avec ledit carter (4) une enveloppe extérieure de ladite machine électrique (1), ledit stator (3) entourant ledit rotor (2), le stator (3) comprenant un corps de stator et des bobines (6) avec des têtes de bobines (7), lesdites têtes de bobines (7) étant enrobées d'un matériau d'enrobage (8), tel qu'une résine, où à chaque extrémité longitudinale de ladite machine électrique est agencé un canal de refroidissement (10) pour une circulation d'un fluide de refroidissement, ledit canal de refroidissement (10) étant formé entre ladite enveloppe extérieure de ladite machine électrique (1) et une plaque annulaire (9) fixée à une extrémité longitudinale dudit matériau d'enrobage desdites têtes de bobines, où ledit matériau d'enrobage (8) desdites têtes de bobines (7) a sensiblement une forme cylindrique, **caractérisé en ce que** le diamètre extérieur dudit matériau d'enrobage (8) est en contact avec ledit carter (4) de ladite machine électrique, et **en ce que** ledit carter (4) ne comporte aucun circuit de refroidissement.

2. Machine électrique selon la revendication 1, dans laquelle ladite plaque annulaire (9) est métallique.

3. Machine électrique selon l'une des revendications précédentes, dans laquelle ladite plaque annulaire (9) comprend au moins une saillie (12, 13), telle qu'un picot (13) ou une nervure (12) ou un creux, ladite saillie ou ledit creux étant dirigée vers ledit canal de refroidissement (10) et/ou vers ledit matériau d'enrobage (8).

4. Machine électrique selon l'une des revendications précédentes, dans laquelle ladite plaque annulaire (9) est mobile longitudinalement par rapport à ladite enveloppe extérieure de ladite machine électrique (1).

5. Machine électrique selon la revendication 4, dans laquelle des moyens d'étanchéité (11) sont agencés entre ladite plaque annulaire (9) et l'enveloppe extérieure de ladite machine électrique (1).

6. Machine électrique selon l'une des revendications précédentes, dans laquelle ledit canal de refroidissement (10) est délimité par ledit flasque (5) et ladite plaque annulaire (9).

7. Machine électrique selon l'une des revendications 1 à 5, dans laquelle ledit canal de refroidissement (10) est délimité par ledit flasque (5), ledit carter (4) et ladite plaque annulaire (9).

8. Machine électrique selon l'une des revendications précédentes, dans laquelle ledit corps de stator comprend un empilement de tôles.

9. Machine électrique selon l'une des revendications précédentes, dans laquelle ladite machine électrique (1) est une machine électrique synchrone, notamment une machine synchro-réluctante, de préférence une machine synchro-réluctante assistée d'aimants permanents.

## Patentansprüche

1. Elektrische Maschine, umfassend einen Rotor (2) und einen Stator(3), die um eine Längsachse koaxial sind, ein Gehäuse (4) und zwei Flansche (5), wobei die beiden Flansche (5) jeweils an den Längsenden des Gehäuses (4) angeordnet sind und mit dem Gehäuse (4) einen Außenmantel der elektrischen Maschine (1) bilden, wobei der Stator (3) den Rotor (2) umgibt, wobei der Stator (3) einen Statorkörper und Wicklungen (6) mit Wicklungsköpfen (7) umfasst, wobei die Wicklungsköpfe (7) in ein Vergussmaterial (8), wie ein Harz, eingebettet sind, wobei an jedem Längsende der elektrischen Maschine ein Kühlkanal (10) für eine Zirkulation eines Kühlfluids angeordnet ist, wobei der Kühlkanal (10) zwischen dem Außenmantel der elektrischen Maschine (1) und einer an einem Längsende des Vergussmaterials der Wicklungsköpfe befestigten ringförmigen Platte (9) gebildet wird, wobei das Vergussmaterial (8) der Wicklungsköpfe (7) eine im Wesentlichen zylindrische Form hat, **dadurch gekennzeichnet, dass** der Außendurchmesser des Vergussmaterials (8) mit dem Gehäuse (4) der elektrischen Maschine in Kontakt steht und dass das Gehäuse (4) keinen Kühlkreislauf aufweist.

2. Elektrische Maschine nach Anspruch 1, wobei die ringförmige Platte (9) metallisch ist.

3. Elektrische Maschine nach einem der vorhergehenden Ansprüche, wobei die ringförmige Platte (9) mindestens einen Vorsprung (12, 13), wie etwa eine Noppe (13) oder eine Rippe (12) oder eine Vertiefung umfasst, wobei der Vorsprung oder die Vertiefung zu dem Kühlkanal (10) hin und/oder zu dem Vergussmaterial (8) hin gerichtet ist.

4. Elektrische Maschine nach einem der vorhergehenden Ansprüche, wobei die ringförmige Platte (9) relativ zu dem Außenmantel der elektrischen Maschine (1) in Längsrichtung beweglich ist.

5. Elektrische Maschine nach Anspruch 4, wobei zwischen der ringförmigen Platte (9) und dem Außenmantel der elektrischen Maschine (1) Dichtungsmittel (11) angeordnet sind.

6. Elektrische Maschine nach einem der vorhergehenden Ansprüche, wobei der Kühlkanal (10) durch den Flansch (5) und die ringförmige Platte (9) begrenzt wird.

7. Elektrische Maschine nach einem der Ansprüche 1 bis 5, wobei der Kühlkanal (10) durch den Flansch (5), das Gehäuse (4) und die ringförmige Platte (9) begrenzt wird.

8. Elektrische Maschine nach einem der vorhergehenden Ansprüche, wobei der Statorkörper einen Blechstapel umfasst.

9. Elektrische Maschine nach einem der vorhergehenden Ansprüche, wobei die elektrische Maschine (1) eine elektrische Synchronmaschine, insbesondere eine Synchron-Reluktanzmaschine, vorzugsweise eine permanentmagnetunterstützte Synchron-Reluktanzmaschine ist.

## Claims

1. Electric machine comprising a rotor (2) and a stator (3) that are coaxial about a longitudinal axis, a casing (4) and two flanges (5), said two flanges (5) being arranged, respectively, at the longitudinal ends of said casing (4) and forming, with said casing (4), an outer shell of said electric machine (1), said stator (3) surrounding said rotor (2), the stator (3) comprising a stator body and coils (6) with coil heads (7), said coil heads (7) being coated with a coating material (8), such as a resin, wherein a cooling channel (10) for the circulation of a cooling fluid is arranged at each longitudinal end of said electric machine, said cooling channel (10) being formed between said outer shell of said electric machine (1) and an annular plate (9) fastened to a longitudinal end of said coating material coating said coil heads, wherein said coating material (8) coating said coil heads (7) has a substantially cylindrical shape, **characterized in that** the outside diameter of said coating material (8) is in contact with said casing (4) of said electric machine, and **in that** said casing (4) does not comprise any cooling circuit.

2. Electric machine according to Claim 1, wherein said annular plate (9) is metallic.

3. Electric machine according to either of the preceding claims, wherein said annular plate (9) comprises at least one protrusion (12, 13), such as a spike (13) or a rib (12), or a recess, said protrusion or said recess being directed towards said cooling channel (10) and/or towards said coating material (8).

4. Electric machine according to one of the preceding claims, wherein said annular plate (9) is able to move longitudinally with respect to said outer shell of said electric machine (1).

5. Electric machine according to Claim 4, wherein sealing means (11) are arranged between said annular plate (9) and the outer shell of said electric machine (1).

6. Electric machine according to one of the preceding claims, wherein said cooling channel (10) is delimited by said flange (5) and said annular plate (9).

7. Electric machine according to one of Claims 1 to 5, wherein said cooling channel (10) is delimited by said flange (5), said casing (4) and said annular plate (9).

8. Electric machine according to one of the preceding claims, wherein said stator body comprises a stack of laminations.

9. Electric machine according to one of the preceding claims, wherein said electric machine (1) is a synchronous electric machine, in particular a synchronous reluctance machine, preferably a permanent magnetassisted synchronous reluctance machine.
